# FASCICULE DE BREVET EUROPEEN

(11) **EP 4 686 519 B1**
(45) Date de publication et mention de la délivrance du brevet: **09.09.2026**
(21) Numéro de dépôt: 25188199.1
(22) Date de dépôt: 08.07.2025
(51) Int. Cl.: B23B 47/28, B23B 49/00, B25B 31/00, F16B 19/10

(54) **OUTIL D'ÉVALUATION DE BAVURES SUR UN ASSEMBLAGE**
WERKZEUG ZUR BEURTEILUNG VON GRATEN AUF EINER ANORDNUNG
TOOL FOR EVALUATING BURR ON ASSEMBLY

(30) Priorité: 29.07.2024 FR 2408373
(43) Date de publication de la demande: 04.02.2026
(73) Titulaire: AIRBUS OPERATIONS (S.A.S.), 31060 Toulouse (FR)
(72) Inventeur: BIGOT, Julien, TOULOUSE (FR); FOISSAC, Charly, TOULOUSE (FR); PICHON, Guillaume, TOULOUSE (FR); FRESSINET, Mathieu, TOULOUSE (FR); FRUTOS TARAVILLO, Santiago, TOULOUSE (FR); LABORIE, Géraud, TOULOUSE (FR)
(74) Mandataire: Airbus-OPS SAS

(56) Documents cités:
- FR-A3- 2 942 420
- US-A1- 2018 021 860

## Description

L'invention concerne un outil d'évaluation qui permet de vérifier si des bavures sont apparues lors de l'usinage d'un assemblage. L'invention concerne également un procédé d'évaluation mis en œuvre à l'aide d'un tel outil d'évaluation.

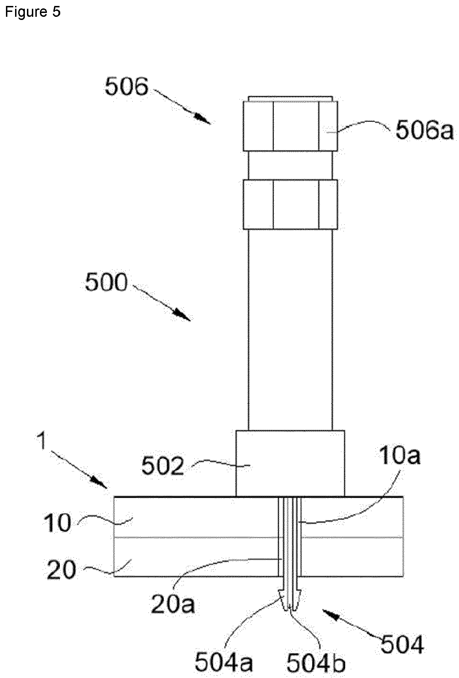

La Figure 5 montre un outil de clampage 500 de l'art antérieur.

Un tel outil de clampage 500 est utilisé pour maintenir deux plaques 10 et 20 l'une contre l'autre lorsqu'elles sont usinées. Un tel outil de clampage 500 permet ainsi de serrer les deux plaques 10 et 20 l'une contre l'autre pendant qu'elles sont percées à l'aide d'un foret.

L'assemblage 1 comporte ainsi une première plaque 10 et une deuxième plaque 20, chacune présente une face d'appui par laquelle elle est en appui contre la face d'appui de l'autre plaque. Chaque plaque 10, 20 est traversée par un alésage 10a, 20a et les deux alésages 10a, 20a sont alignés. Chaque plaque 10, 20 présente une face extérieure opposée à la face d'appui de ladite plaque 10, 20.

L'outil de clampage 500 comporte une base 502 qui vient en appui contre la face extérieure d'une première plaque 10 et des moyens de serrage 504 qui sont reliés à la base 502 et se projettent au-delà de la deuxième plaque 20. Ici, les moyens de serrage 504 prennent la forme de dents 504a, où chacune est montée à une extrémité d'une tige dont l'autre extrémité est reliée à la base 502. Les tiges traversent les plaques 10 et 20 à travers les alésages 10a, 20a prévus à cet effet

L'outil de clampage 500 comporte également des moyens d'actionnement 506 qui sont arrangés pour rapprocher les dents 504a de la deuxième plaque 20 et ainsi serrer les deux plaques 10 et 20 l'une contre l'autre entre les dents 504a et la base 502.

Les moyens d'actionnement 506 comprennent ici un écrou 506a mobile en rotation et qui, par un mécanisme approprié (non représenté), assure le rapprochement des dents 504a de la deuxième plaque 20 et l'écartement des dents 504a contre les bords de l'alésage 20a de la deuxième plaque 20. L'écartement des dents 504a est réalisé entre autres par une tige centrale 504b qui est au milieu des dents 504a et qui est conformé pour écarter les dents 504a lors du rapprochement des dents de la deuxième plaque 20.

La mise en place de plusieurs de ces outils de clampage 500 entre les plaques 10 et 20 permet de maintenir ces plaques 10 et 20 l'une contre l'autre lorsque des perçages doivent être réalisés simultanément à travers ces deux plaques 10 et 20.

Malgré ces outils de clampage 500, il peut arriver que des bavures apparaissent entre les plaques 10 et 20 lors des perçages et il est donc nécessaire de vérifier si de telles bavures apparaissent pour pouvoir les enlever avant de fixer définitivement les deux plaques 10 et 20 entre elles.

FR 2 942 420 A3 montre un outil selon le préambule de la revendication 1.

Un objet de la présente invention est de proposer un outil d'évaluation, tel que revendiqué à la revendication 1. Avec un tel arrangement, la présence de bavures peut être détectée et ces bavures peuvent alors être retirées avant la fixation des plaques entre elles.

L'invention propose également un procédé d'évaluation, tel que revendiqué à la revendication 5.

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
La figure 1 montre un outil d'évaluation selon un premier mode de réalisation de l'invention,
La figure 2 montre un assemblage équipé d'outils d'évaluation selon l'invention,
La figure 3 est une vue de côté d'un outil d'évaluation selon un deuxième mode de réalisation de l'invention,
La figure 4 est une vue en perspective d'un détail de l'outil d'évaluation de la figure 3, et
La figure 5 montre un outil de clampage de l'état de la technique.

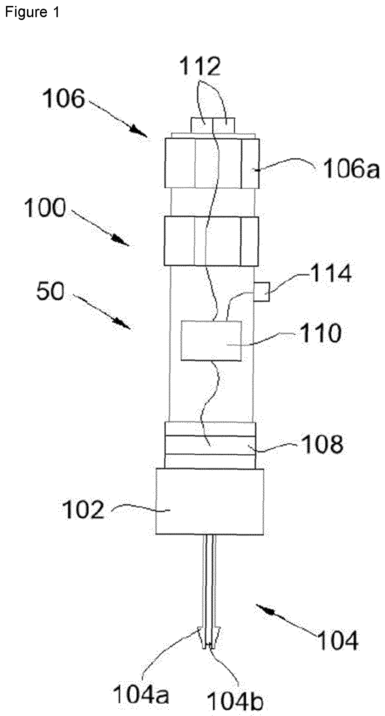

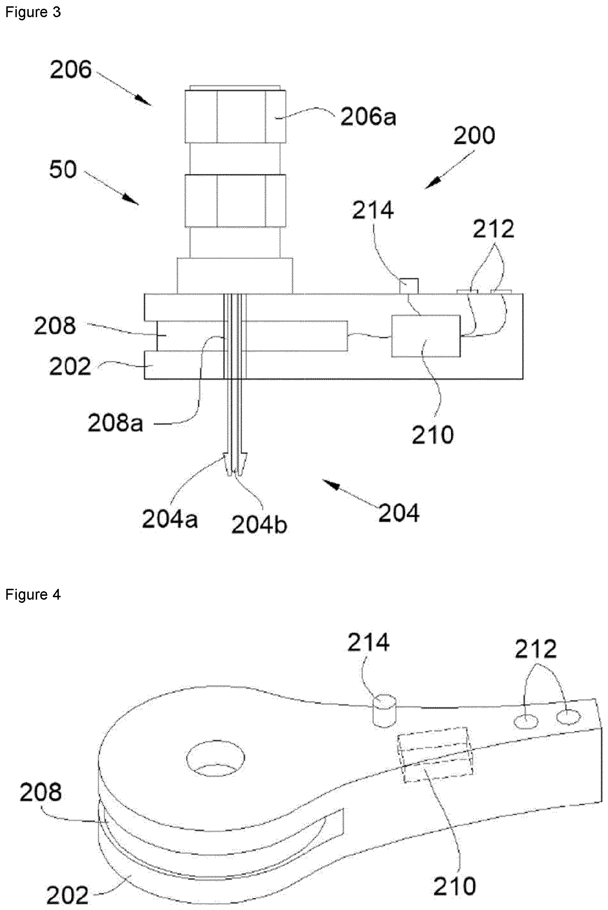

La figure 1 montre un outil d'évaluation 100 selon un premier mode de réalisation de l'invention, et les figures 3 et 4 montrent un outil d'évaluation 200 selon un deuxième mode de réalisation de l'invention.

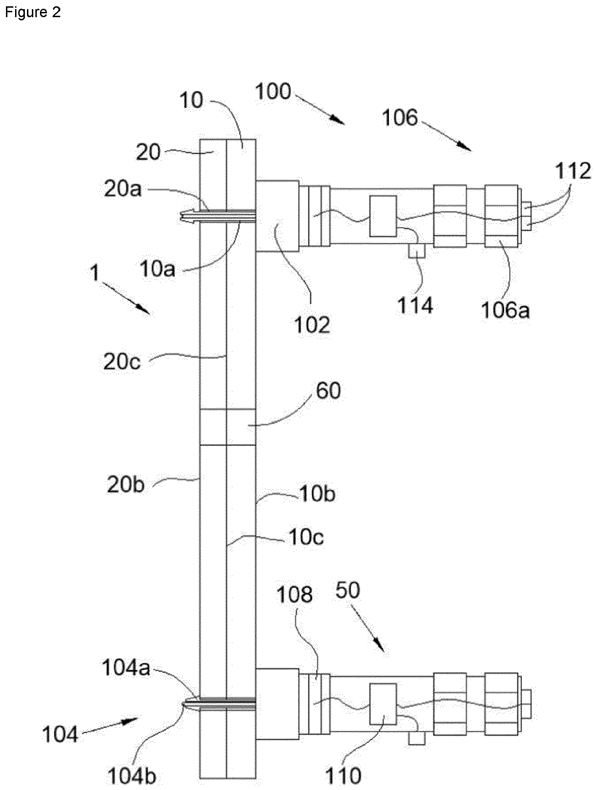

La figure 2 montre la mise en place de plusieurs outils d'évaluation 100 sur un assemblage 1 de deux plaques 10 et 20. La mise en place d'outils d'évaluation 200 s'effectue de la même manière.

L'assemblage 1 comporte une première plaque 10 et une deuxième plaque 20 qui sont accolées l'une à l'autre par une face d'appui commune 10c, 20c. Chaque plaque 10, 20 comporte à l'opposé de la face d'appui 10c, 20c, une face extérieure 10b, 20b orientée vers l'extérieur de l'assemblage 1. La structure de l'outil d'évaluation 100, 200 est similaire à celle de l'outil de clampage 500 de l'état de la technique, en ce sens qu'il assure un serrage des deux plaques 10 et 20 entre elles avant qu'elles subissent un usinage comme un perçage d'un trou 60 les traversant.

Chaque plaque 10, 20 est traversée par un alésage 10a, 20a et les deux alésages 10a, 20a sont alignés.

L'outil d'évaluation 100, 200 comporte une base 102, 202 qui vient en appui contre la face extérieure 10a de la première plaque 10.

Comme pour l'état de la technique, l'outil d'évaluation 100, 200 comporte des moyens de serrage 104 et 204 qui sont prévus pour venir au-delà de la face extérieure 20b après mise en place autour des plaques 10 et 20 et en particulier ici après introduction dans les alésages 10a, 20a.

Comme pour l'état de la technique, l'outil d'évaluation 100, 200 comporte des moyens d'actionnement 106 et 206 qui sont arrangés pour serrer les moyens de serrage 104 et 204 contre la face extérieure 20b de la deuxième plaque 20. Ainsi, après serrage, les moyens de serrage 104 et 204 viennent en appui contre la face extérieure 20b de la deuxième plaque 20. Les moyens de serrage 104, 204 prennent ici la même forme que ceux de l'état de la technique, et ils sont constitués d'une pluralité de dents 104a, 204a.

Sur la gauche de la figure 2, les moyens de serrage 104 ne sont pas serrés et sur la droite de la figure 2, les moyens de serrage 104 sont serrés. Comme pour l'état de la technique, chaque dent 104a, 204a est montée à une extrémité d'une tige dont l'autre extrémité est reliée à la base 102, 202 et les tiges traversent les plaques 10 et 20 à travers les alésages 10a, 20a prévus à cet effet.

Comme expliqué ci-dessous, le rapprochement des dents de la surface extérieure 20b de la deuxième plaque 20 tend à écarter les dents vers l'extérieur afin qu'elles s'accrochent au bord de l'alésage 20a. l'écartement s'effectue entre autres du fait de la présence d'une tige centrale 104b, 204b qui est au milieu des dents 104a, 204a et qui est conformé pour écarter les dents 104a, 204a lors du rapprochement des dents 104a, 204a de la deuxième plaque 20. Les moyens d'actionnement 106, 206 prennent ici la forme de ceux de l'état de la technique et ils comportent un écrou 106a, 206a monté mobile en rotation sur un arbre fileté mais bloqué en translation. Une extrémité de l'arbre fileté est liée aux moyens de serrage 104, 204, en particulier à travers l'autre extrémité des tiges qui est liée audit arbre fileté.

L'arbre fileté n'est pas vu sur les figures, car il est caché à l'intérieur du corps 50 de l'outil d'évaluation 100, 200.

Ainsi, en manœuvrant l'écrou 106a, 206a, l'arbre fileté remonte dans le corps 50 de l'outil d'évaluation 100, 200 en entraînant les tiges et les moyens de serrage 104, 204 qui se plaquent contre la face extérieure 20b de la deuxième plaque 20. Lors de ce plaquage, les dents 10a, 204a s'écartent contre les bords de l'alésage 20a.

L'outil d'évaluation comporte également un capteur de pression 108, 208 qui délivre une information relative à la pression qu'il subit. Le capteur de pression 108, 208 est arrangé pour être écrasé lorsque les moyens de serrage 104, 204 serrent les plaques 10 et 20.

Dans chacun des modes de réalisation représentés ici, le capteur de pression 108, 208 est disposé à l'arrière de la base 102, 202, c'est-à-dire à l'opposé de la première plaque 10 et au niveau d'une partie de l'outil d'évaluation 100, 200 qui est comprimé lors du serrage des moyens de serrage 104, 204.

Du fait du serrage, le corps 50 tend à se rapprocher de la première plaque 10 et donc à écraser le capteur de pression 108, 208.

L'outil d'évaluation 100, 200 comporte également un indicateur 112, 212 qui peut émettre un premier signal et un deuxième signal. Par exemple, il peut émettre alternativement un signal lumineux vert ou un signal lumineux rouge. Dans les modes de réalisation représentés ici, l'indicateur 112, 212 comporte deux diodes, par exemple une verte et une rouge.

L'outil d'évaluation 100, 200 comporte également une unité de contrôle 110, 210 qui est connectée, d'une part, au capteur de pression 108, 208 et, d'autre part, à l'indicateur 112, 212. L'unité de contrôle 110, 210 reçoit les informations du capteur de pression 108, 208 et commande l'indicateur 112, 212 de manière à ce qu'il émette le premier signal ou le deuxième signal.

L'unité de contrôle 110, 210 constitue une plateforme matérielle qui présente, reliés par un bus de communication : un processeur ou CPU (« Central Processing Unit » en anglais), une mémoire vive RAM (« Read-Only Memory » en anglais), une mémoire morte, par exemple de type ROM (« Read Only Memory » en anglais) ou EEPROM (« Electrically-Erasable Programmable ROM » en anglais), une unité de stockage, telle qu'un disque dur HDD (« Hard Disk Drive » en anglais), ou un lecteur de support de stockage, tel qu'un lecteur de cartes SD (« Secure Digital » en anglais), et un gestionnaire d'interfaces en liaison avec le capteur de pression 108, 208 et l'indicateur 112, 212.

Le processeur est capable d'exécuter des instructions chargées dans la mémoire vive à partir de la mémoire morte, d'une mémoire externe, d'un support de stockage (tel qu'une carte SD), ou d'un réseau de communication. Lorsque l'unité de contrôle 110, 210 est mise sous tension, le processeur est capable de lire de la mémoire vive des instructions et de les exécuter. Ces instructions forment un programme d'ordinateur causant l'implémentation, par le processeur, de tout ou partie des étapes et fonctionnements décrits ici.

Tout ou partie des étapes et fonctionnements décrits ici peut ainsi être implémenté sous forme logicielle par exécution d'un ensemble d'instructions par une machine programmable, par exemple un processeur de type DSP (« Digital Signal Processor » en anglais) ou un microcontrôleur, ou être implémenté sous forme matérielle par une machine ou un composant électronique (« chip » en anglais) dédié ou un ensemble de composants électroniques (« chipset » en anglais) dédié, par exemple un composant FPGA (« Field Programmable Gate Array » en anglais) ou ASIC («Application Specific Integrated Circuit» en anglais). D'une manière générale, la plateforme matérielle comporte de la circuiterie électronique adaptée et configurée pour implémenter les fonctionnements et étapes décrits ici.

L'unité de contrôle 110, 210 comporte ainsi des moyens pour enregistrer une première valeur représentative de la pression mesurée par le capteur de pression 108, 208 lorsque les moyens de serrage 104, 204 serrent les plaques (10,20), avant l'usinage. Cette première valeur est représentative de la pression qui s'exerce sur le capteur de pression 108, 208 en l'absence de bavure entre les plaques 10 et 20. Cette première mesure est enregistrée par exemple lorsqu'un technicien appuie sur un bouton de commande 114, 214 qui est connecté à l'unité de contrôle 110, 210. Ainsi, lorsque le technicien appuie une première fois sur le bouton de commande 114, 214, l'unité de contrôle 110, 210 enregistre la première valeur dans l'une de ces mémoires. Selon un autre mode de réalisation, l'unité de contrôle 110, 210 détecte lorsque la pression mesurée par le capteur de pression 108, 208 est stable, c'est-à-dire que la dérivée de la mesure de pression est nulle. La pression alors atteinte donne alors la première valeur. Selon un mode de réalisation particulier, la première valeur est représentative d'une pression de l'ordre de 200 N.

De la même manière, après que l'usinage, par exemple le perçage du trou 60, a été effectué, l'unité de contrôle 110, 210 comporte aussi des moyens pour enregistrer une deuxième valeur représentative de la pression mesurée par le capteur de pression 108, 208 lorsque les plaques 10, 20 ont subi l'usinage. Cette deuxième valeur est représentative de la pression qui s'exerce sur le capteur de pression 108, 208 avec potentiellement des bavures entre les plaques 10 et 20. Cette deuxième mesure est enregistrée par exemple lorsque le technicien appuie une deuxième fois sur le bouton de commande 114, 214 et l'enregistrement de la deuxième valeur s'effectue dans l'une des mémoires de l'unité de contrôle 110, 210. Comme précédemment, la deuxième valeur peut être obtenue lorsque la pression mesurée par le capteur de pression 108, 208 est stable.

À partir de ces deux valeurs, l'unité de contrôle 110, 210 comporte des moyens pour comparer la première valeur et la deuxième valeur et si la première valeur et la deuxième valeur sont égales, alors cela signifie, qu'aucune bavure n'est apparue, par contre, si la première valeur et la deuxième valeur sont différentes alors cela signifie que des bavures sont apparues et qu'il sera nécessaire de les retirer. En cas d'apparition de bavures, la deuxième valeur est supérieure à la première valeur.

Les comparaisons s'entendent aux marges d'erreur près, en particulier aux marges d'erreur des capteurs de pression qui sont généralement de l'ordre de 3%. Ainsi, selon un mode de réalisation particulier, on peut considérer qu'il y a une différence si on est au-delà de 5% ou 10% de différence. Cette limite dépend par exemple du diamètre du trou percé, elle peut être de 5% lorsque le diamètre du trou (par exemple inférieur ou égal à 5 mm) est petit et de 10% lorsque le diamètre du trou est grand (par exemple supérieur à 5 mm). Mais elle peut dépendre également du matériau utilisé, du nombre de moyens de serrage, de la distance du trou percé aux moyens de serrage, etc.

Selon un mode de réalisation particulier, la marge de détermination que la première valeur et la deuxième valeur sont différentes est déterminée par des tables d'essais dépendantes d'au moins un des critères suivants : diamètre du trou percé, marge d'erreur du capteur de pression 108, 208, nombre de moyens de serrage 104, 204, distance du trou percé aux moyens de serrage 104, 204. Par exemple ces tables sont enregistrées dans une mémoire de l'unité de contrôle 110, 210 et à l'aide d'une interface, le technicien choisit les valeurs appropriées en fonction du cas.

En fonction du résultat de la comparaison, l'unité de contrôle 110, 210 comporte des moyens pour commander l'indicateur 112, 212 afin qu'il émette le premier signal lorsque la première valeur et la deuxième valeur sont égales et le deuxième signal lorsque la première valeur et la deuxième valeur sont différentes.

Avec un tel outil d'évaluation 100, 200, le technicien peut ainsi rapidement vérifier que des bavures sont apparues ou non, et prendre les actions nécessaires.

Dans les modes de réalisation de l'invention présentés ici, le capteur de pression 108, 208 présente un passage 208a (uniquement visible dans le deuxième mode de réalisation) à travers lequel passent les tiges tenant les dents 104a, 204a.

Selon un mode de réalisation particulier, le capteur de pression 108, 208 est un élément piézoélectrique.

Dans le premier mode de réalisation de l'invention, l'outil d'évaluation 100 est entièrement intégré dans la mesure où il n'y a pas de pièces séparables sans démontage de l'outil d'évaluation 100.

Dans le deuxième mode de réalisation de l'invention, le capteur de pression 208 et la base 202 forment un ensemble dissocié des moyens de serrage 204 et des moyens d'actionnement 206. La base 202 et le capteur de pression 208 peuvent ainsi être dissociés du reste de l'outil d'évaluation 200 et ils peuvent être utilisés avec un autre type d'élément de clampage.

Un procédé d'évaluation de la présence ou non de bavures entre les deux plaques 10 et 20 après usinage est mis en oeuvre avec un outil d'évaluation 100, 200 tel que décrit ci-dessus. Le procédé d'évaluation décrit ci-dessous s'applique de la même manière avec plusieurs outils d'évaluation 100, 200. Le procédé d'évaluation comporte ainsi :
- une étape de mise en place au cours de laquelle la base 102, 202 est placée contre la face extérieure 10b de la première plaque 10 et les moyens de serrage 104, 204 sont disposés au voisinage, c'est-à-dire ici au-delà, de la face extérieure 20b de la deuxième plaque 20,
- une étape de serrage au cours de laquelle les moyens d'actionnement 106, 206 sont actionnés par le technicien pour serrer les moyens de serrage 104, 204 contre la face extérieure 20b de la deuxième plaque 20, ici en ramenant les dents 104a, 204a,
- une première étape d'enregistrement au cours de laquelle l'unité de contrôle 110, 210 enregistre la première valeur, par exemple par une première pression sur le bouton de commande 114, 214, ou par la mesure d'une dérivée nulle de la pression mesurée,
- une étape d'usinage au cours de laquelle les plaques 10, 20 sont usinées, par exemple par perçage par un trou 60 des deux plaques 10 et 20,
- une deuxième étape d'enregistrement au cours de laquelle l'unité de contrôle 110, 210 enregistre la deuxième valeur, par exemple par une deuxième pression sur le bouton de commande 114, 214, ou par la mesure d'une dérivée nulle de la pression mesurée,
- une étape de comparaison au cours de laquelle l'unité de contrôle 110, 210 compare la première valeur et la deuxième valeur, et
- une étape de commande au cours de laquelle, en fonction des résultats de l'étape de comparaison, l'unité de contrôle 110, 210 commande l'émission par l'indicateur 112, 212 du premier signal ou du deuxième signal.

## Revendications

1. Outil d'évaluation (100, 200) pour un assemblage (1) comportant une première et une deuxième plaques (10, 20) accolées l'une à l'autre, ledit outil d'évaluation (100, 200) comportant :
- une base (102, 202) arrangée pour venir en appui contre une face extérieure (10b) de la première plaque (10),
- des moyens de serrage (104, 204) arrangés pour venir en appui contre une face extérieure (20b) de la deuxième plaque (20),
- des moyens d'actionnement (106, 206) arrangés pour serrer les moyens de serrage (104, 204) contre la face extérieure (20b) de la deuxième plaque (20),
- un capteur de pression (108, 208) adapté à délivrer une information relative à la pression qu'il subit et arrangé pour être écrasé lorsque les moyens de serrage (104, 204) serrent les plaques (10, 20),
et **caractérisé en ce qu'**il comporte en outre:
- un indicateur (112, 212) adapté à émettre un premier signal et un deuxième signal,
- une unité de contrôle (110, 210) comportant des moyens pour enregistrer une première valeur représentative de la pression mesurée par ledit capteur de pression (108, 208) lorsque les moyens de serrage (104, 204) serrent les plaques (10,20) pour enregistrer une deuxième valeur représentative de la pression mesurée par ledit capteur de pression (108, 208) lorsque les plaques (10, 20) ont subi un usinage, pour comparer la première valeur et la deuxième valeur, et pour commander l'indicateur (112, 212) pour qu'il émette le premier signal lorsque la première valeur et la deuxième valeur sont égales et le deuxième signal lorsque la première valeur et la deuxième valeur sont différentes.

2. Outil d'évaluation (100, 200) selon la revendication 1, **caractérisé en ce que** la marge de détermination que la première valeur et la deuxième valeur sont différentes est déterminée par des tables d'essais dépendantes d'au moins un des critères suivants : diamètre du trou percé, marge d'erreur du capteur de pression (108, 208), nombre de moyens de serrage (104, 204), distance du trou percé aux moyens de serrage (104, 204).

3. Outil d'évaluation (100, 200) selon l'une des revendications 1 ou 2, **caractérisé en ce que** le capteur de pression (108, 208) est un élément piézoélectrique.

4. Outil d'évaluation (200) selon l'une des revendications 1 à 3, **caractérisé en ce que** le capteur de pression (208) et la base (202) forment un ensemble dissocié des moyens de serrage (204) et des moyens d'actionnement (206).

5. Procédé d'évaluation mis en œuvre avec un outil d'évaluation (100, 200) selon l'une des revendications précédentes et comportant :
- une étape de mise en place au cours de laquelle la base (102, 202) est placée contre une face extérieure (10b) d'une première plaque (10) et les moyens de serrage (104, 204) sont disposés au voisinage d'une face extérieure (20b) d'une deuxième plaque (20),
- une étape de serrage au cours de laquelle les moyens d'actionnement (106, 206) sont actionnés pour serrer les moyens de serrage (104, 204) contre la face extérieure (20b) de la deuxième plaque (20),
- une première étape d'enregistrement au cours de laquelle la première valeur est enregistrée,
- une étape d'usinage au cours de laquelle les plaques (10, 20) sont usinées,
- une deuxième étape d'enregistrement au cours de laquelle la deuxième valeur est enregistrée,
- une étape de comparaison au cours de laquelle la première valeur et la deuxième valeur sont comparées, et
- une étape de commande au cours de laquelle, en fonction des résultats de l'étape de comparaison, l'unité de contrôle (110, 210) commande l'émission par l'indicateur (112, 212) du premier signal ou du deuxième signal.

## Patentansprüche

1. Beurteilungswerkzeug (100, 200) für eine Baugruppe (1), die eine erste und eine zweite Platte (10, 20) umfasst, die aneinandergefügt sind, das Beurteilungswerkzeug (100, 200) umfassend:
- eine Basis (102, 202), die dazu eingerichtet ist, an einer Außenseite (10b) der ersten Platte (10) anzuliegen,
- Spannmittel (104, 204), die dazu eingerichtet sind, an einer Außenseite (20b) der zweiten Platte (20) anzuliegen,
- Betätigungsmittel (106, 206), die dazu eingerichtet sind, die Spannmittel (104, 204) gegen die Außenseite (20b) der zweiten Platte (20) zu spannen,
- einen Drucksensor (108, 208), der dazu ausgelegt ist, eine Information über den Druck auszugeben, den er erfährt, und der dazu eingerichtet ist, zusammengedrückt zu werden, wenn die Spannmittel (104, 204) die Platten (10, 20) spannen;
und **dadurch gekennzeichnet, dass** es ferner umfasst:
- einen Anzeiger (112, 212), der dazu ausgelegt ist, ein erstes Signal und ein zweites Signal auszusenden,
- eine Steuereinheit (110, 210), die Mittel umfasst, um einen ersten Wert aufzuzeichnen, der für den Druck repräsentativ ist, der von dem Drucksensor (108, 208) gemessen wird, wenn die Spannmittel (104, 204) die Platten (10, 20) spannen, um einen zweiten Wert aufzuzeichnen, der für den Druck repräsentativ ist, der von dem Drucksensor (108, 208) gemessen wird, wenn die Platten (10, 20) eine Bearbeitung erfahren haben, um den ersten Wert und den zweiten Wert zu vergleichen und um den Anzeiger (112, 212) zu steuern, damit er das erste Signal aussendet, wenn der erste Wert und der zweite Wert gleich sind, und das zweite Signal, wenn der erste Wert und der zweite Wert unterschiedlich sind.

2. Beurteilungswerkzeug (100, 200) nach Anspruch 1, **dadurch gekennzeichnet, dass** die Bestimmungsmarge, dass der erste Wert und der zweite Wert unterschiedlich sind, durch Testtabellen bestimmt wird, die von mindestens einem der folgenden Kriterien abhängig sind: Durchmesser des gebohrten Lochs, Fehlermarge des Drucksensors (108, 208), Anzahl von Spannmitteln (104, 204), Abstand des gebohrten Lochs zu den Spannmitteln (104, 204).

3. Beurteilungswerkzeug (100, 200) nach einem der Ansprüche 1 oder 2, **dadurch gekennzeichnet, dass** der Drucksensor (108, 208) ein piezoelektrisches Element ist.

4. Beurteilungswerkzeug (200) nach einem der Ansprüche 1 bis 3, **dadurch gekennzeichnet, dass** der Drucksensor (208) und die Basis (202) eine Anordnung bilden, die von den Spannmitteln (204) und von den Betätigungsmitteln (206) getrennt ist.

5. Beurteilungsverfahren, das mit einem Beurteilungswerkzeug (100, 200) nach einem der vorhergehenden Ansprüche durchgeführt wird und Folgendes umfasst:
- einen Einrichtungsschritt, bei dem die Basis (102, 202) an einer Außenseite (10b) einer ersten Platte (10) platziert wird und die Spannmittel (104, 204) in der Nähe einer Außenseite (20b) einer zweiten Platte (20) angeordnet werden,
- einen Spannschritt, bei dem die Betätigungsmittel (106, 206) betätigt werden, um die Spannmittel (104, 204) gegen die Außenseite (20b) der zweiten Platte (20) zu spannen,
- einen ersten Aufzeichnungsschritt, bei dem der erste Wert aufgezeichnet wird,
- einen Bearbeitungsschritt, bei dem die Platten (10, 20) bearbeitet werden,
- einen zweiten Aufzeichnungsschritt, bei dem der zweite Wert aufgezeichnet wird,
- einen Vergleichsschritt, bei dem der erste Wert und der zweite Wert verglichen werden, und
- einen Steuerschritt, bei dem die Steuereinheit (110, 210) in Abhängigkeit von den Ergebnissen des Vergleichsschritts das Aussenden des ersten Signals oder des zweiten Signals durch den Anzeiger (112, 212) steuert.

## Claims

1. Evaluation tool (100, 200) for an assembly (1) comprising a first and a second plate (10, 20) that are joined to one another, said evaluation tool (100, 200) comprising:
- a base (102, 202) arranged to bear against an outer face (10b) of the first plate (10),
- clamping means (104, 204) arranged to bear against an outer face (20b) of the second plate (20),
- actuating means (106, 206) arranged to clamp the clamping means (104, 204) against the outer face (20b) of the second plate (20),
- a pressure sensor (108, 208) configured to provide information relating to the pressure applied thereto and arranged to be compressed when the clamping means (104, 204) clamp the plates (10, 20),
and **characterized in that** it further comprises:
- an indicator (112, 212) configured to emit a first signal and a second signal,
- a control unit (110, 210) comprising means for recording a first value representative of the pressure measured by said pressure sensor (108, 208) when the clamping means (104, 204) clamp the plates (10, 20) to record a second value representative of the pressure measured by said pressure sensor (108, 208) after the plates (10, 20) have been machined, to compare the first value and the second value, and to command the indicator (112, 212) to emit the first signal if the first value and the second value are equal and the second signal if the first value and the second value are different.

2. Evaluation tool (100, 200) according to Claim 1, **characterized in that** the threshold for determining whether the first value and the second value are different is set using test tables based on at least one of the following criteria: diameter of the drilled hole, error margin of the pressure sensor (108, 208), number of clamping means (104, 204), distance from the drilled hole to the clamping means (104, 204).

3. Evaluation tool (100, 200) according to either of Claims 1 and 2, **characterized in that** the pressure sensor (108, 208) is a piezoelectric element.

4. Evaluation tool (200) according to one of Claims 1 to 3, **characterized in that** the pressure sensor (208) and the base (202) form an assembly that is separate from the clamping means (204) and the actuating means (206).

5. Evaluation method implemented using an evaluation tool (100, 200) according to one of the preceding claims and comprising:
- a placement step during which the base (102, 202) is placed against an outer face (10b) of a first plate (10) and the clamping means (104, 204) are disposed in the vicinity of an outer face (20b) of a second plate (20),
- a clamping step during which the actuating means (106, 206) are actuated in order to clamp the clamping means (104, 204) against the outer face (20b) of the second plate (20),
- a first recording step during which the first value is recorded,
- a machining step during which the plates (10, 20) are machined,
- a second recording step during which the second value is recorded,
- a comparison step during which the first value and the second value are compared, and
- a command step during which, depending on the results of the comparison step, the control unit (110, 210) commands the indicator (112, 212) to emit the first signal or the second signal.
